# EUROPEAN PATENT APPLICATION

(11) **EP 4 474 100 A1**
(43) Date of publication of application: **11.12.2024**
(21) Application number: 24177109.6
(22) Date of filing: 21.05.2024
(51) Int. Cl.: B23Q 1/01, B23Q 1/03, B23Q 17/22, B27M 1/08

(54) **WORK CENTRE COMPRISING A CONTACT DETECTION DEVICE AND ASSOCIATED METHOD**

(30) Priority: 23.05.2023 IT 202300010419
(71) Applicant: SCM Group S.p.A., 47921 Rimini (RN) (IT)
(72) Inventor: PAOLIZZI, Simone, 47921 Rimini (IT); FONTI, Michele, 47921 Rimini (IT); FABBRI, Fabio, 47921 Rimini (IT); PAGNONI, Alessandro, 47921 Rimini (IT)
(74) Representative: Tiburzi, Andrea

(57) **Abstract**

The present invention relates to a work centre (M) comprising a work plane (2), on which pieces (P) can be arranged and fixed, comprising a base (21); a bridge (3) movably coupled to said base (21), and comprising one or more processing members (32) for machining said pieces (P); and at least one contact detection device (1), said at least one contact detection device (1) being arranged on said work plane (2) and configured to emit at least one signal in response to determining that at least a portion of said contact detection device (1) is in contact with a piece (P) or is not in contact with said piece (P).

## Description

The present invention relates to a work centre comprising a work plane and at least one contact detection device.

More specifically, the invention concerns a work centre, such as a work centre configured to perform cuts or other machining on pieces, panels, or bars, made of wood, plastic, cardboard, corrugated plastics, and/or other materials.

In particular, the present invention refers to a work centre comprising a work plane, on which pieces can be arranged and fixed, a movable bridge including one or more processing units for machining the pieces, and at least one contact detection device configured to emit a signal in response to determining that at least a portion of it is in contact with the piece.

The present invention also refers to a method implemented by a control logic unit to operate at least one contact detection device and a method for controlling the operation of the work centre.

In the following description, the focus will be on the field of machining of wooden pieces. However, it is clear that this description should not be considered limited to this specific use or to the exclusive types of materials or objects mentioned here.

### Background

Work centres comprising a work plane on which pieces, such as panels or bars made of wood, plastic, cardboard, corrugated plastics, and/or other materials, can be arranged and fixed, are well known.

These work centres may comprise numerically controlled machines, equipped with a translating bridge mobile with respect to the work plane on which one or more operational units are installed, including appropriate means for machining wooden pieces.

The movable bridge provides the operational units with the degrees of freedom necessary for the translation and/or rotation required to machine the pieces.

The work plane may comprise a continuous surface or a plurality of sliding bars arranged parallel to each other.

The continuous surface may itself include one or more openings for distributing a fluid at negative pressure, creating a vacuum to hold the piece on the work plane surface, or a series of clamps to secure the piece on the continuous surface. These clamps may be held in place by the fluid distributed at negative pressure.

Alternatively, if the work plane comprises sliding bars, these bars may themselves include bases on which pneumatic units, such as fixing or supporting organs for the pieces, like suction cups, clamps, or similar, can be mounted.

To facilitate the positioning of pieces on the work plane, these work centres conventionally may be equipped with stop or arrest elements for the piece, which are arranged on the work plane itself or on the bars. These stop elements are fixed on the work plane. The work planes may be equipped with one or more stop elements along both the X and Y directions of the work plane.

However, if there is no contact of the piece with a respective stop or arrest element, or if the piece moves during the machining process, the machining program is executed suboptimally on the piece, resulting in an undesired outcome compared to the expected result.

It is therefore desirable to improve the work centre to reduce discrepancies between the predetermined work program and the one actually executed on the piece.

### Aim of the Invention

The aim of the present invention is to overcome these disadvantages by providing a work centre and an associated method to reduce discrepancies between the work program and the work actually performed and to avoid possible collisions of the processing members due to the incorrect placement of the pieces on the work plane, for instance, during the machining process.

Additionally, the present invention aims to facilitate the correct positioning of the pieces on the work plane by proactively and intelligently informing the operator about the placement of the pieces and promptly interrupting the execution of a subsequent work step or the start of the work cycle if the pieces are not positioned as indicated by the work program.

Another aim of the present invention is to improve human-machine interaction.

The object of the present invention is a work centre as claimed in claim 1, a method to operate at least one contact detection device as claimed in claim 13, a method to control the work centre's operation as claimed in claim 16, and a software product as claimed in claim 17.

Further preferred embodiments are described in the dependent claims.

### Brief Description of the Attached Figures

The present invention will now be described, by way of example but not limitation, according to one of its embodiments, with particular reference to the attached figures, in which:
- Figure 1 shows a perspective view of a work centre comprising a work plane suitable for clamping panels to be machined, with contact detection devices arranged on it, according to one embodiment of the present invention;
- Figure 2 shows a perspective view of the work plane of the work centre shown in Figure 1, where the work plane includes a plurality of sliding bars arranged parallel to each other, with a panel to be machined arranged on them, according to one embodiment of the present invention;
- Figure 3 shows a detailed perspective view of the bars of the work plane, according to one embodiment of the present invention;
- Figure 4 shows another detailed perspective view of the bars of the work plane, according to one embodiment of the present invention;
- Figure 5 shows a perspective view of a contact detection device, according to one embodiment of the present invention;
- Figure 6 shows a section in the XZ plane of the contact detection device shown in Figure 5, according to one embodiment of the present invention;
- Figure 7 schematically shows a graphical interface of the display device, according to one embodiment of the present invention;
- Figure 8 schematically shows a system comprising the work centre shown in Figure 1 and a plurality of mobile and fixed terminals communicatively associated with the work centre, according to one embodiment of the present invention;
- Figure 9 shows a block diagram of a method to operate at least one contact detection device, according to one embodiment of the present invention;
- Figure 10 shows a perspective view comprising a plurality of contact detection devices and bars or wooden blocks arranged on the work plane, according to one embodiment of the present invention;
- Figure 11 shows a block diagram of a method to control the work centre's

operation, according to one embodiment of the present invention.

### Detailed Description of the Invention

In the various figures, similar parts will be indicated with the same reference numbers.

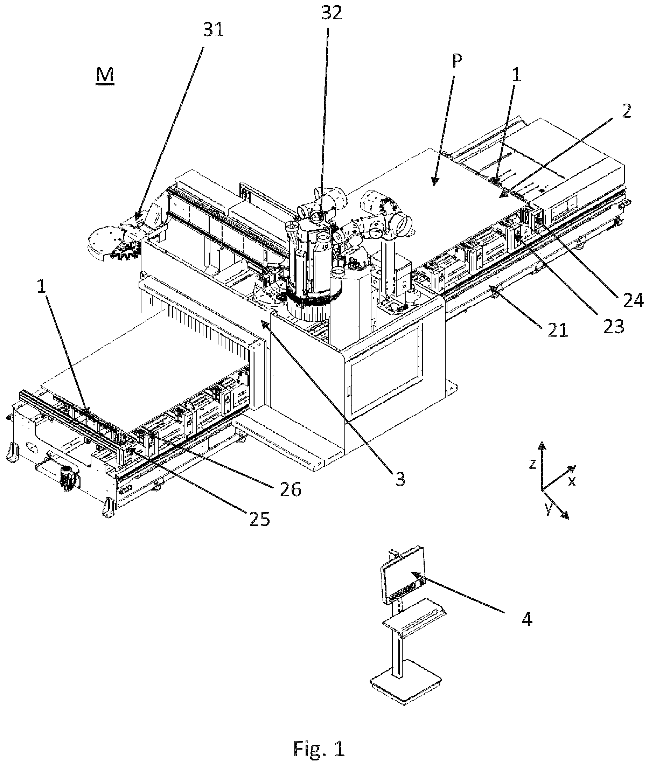

Referring to Figure 1, a perspective view of a work centre M is shown, such as a work centre M configured to perform cuts or other operations on pieces P, such as panels, bars, and/or blocks, made of wood, plastic, cardboard, corrugated plastics, and/or any other material.

The work centre M comprises a work plane 2, such as a flat and horizontal work plane or a work plane 2 comprising a plurality of bars 23-26 arranged parallel to each other, on which the pieces P can be arranged and/or fixed.

These bars 23-26 can be sliding or fixed bars. For instance, the outer bars 25, 24 can be fixed to accommodate the stops for referencing the pieces in the X direction, while the remaining inner bars 26, 23 can slide in the X direction to accommodate the stops for referencing the pieces to be machined in the Y direction.

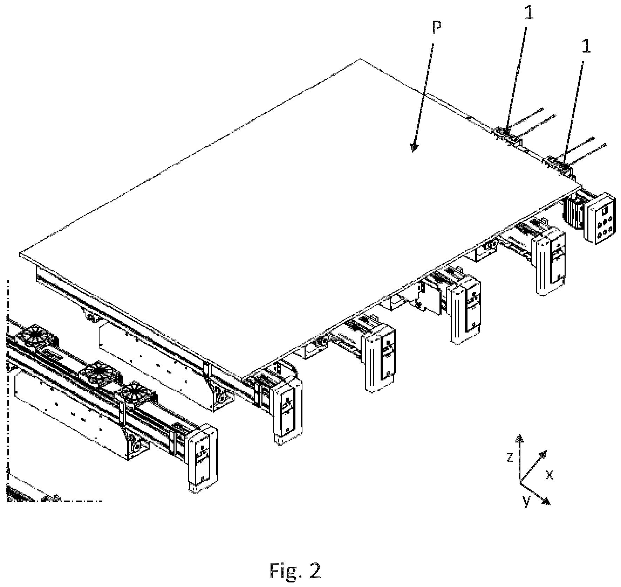

Figure 2 shows a perspective view of the work plane 2 of the work centre M shown in Figure 1. In Figure 2, the panel P to be machined is arranged on a group of bars. The sliding bars may include bases on which one or more pneumatic units, such as clamping, gripping, or supporting units for the pieces, like suction cups, clamps, or similar, can be optionally mounted.

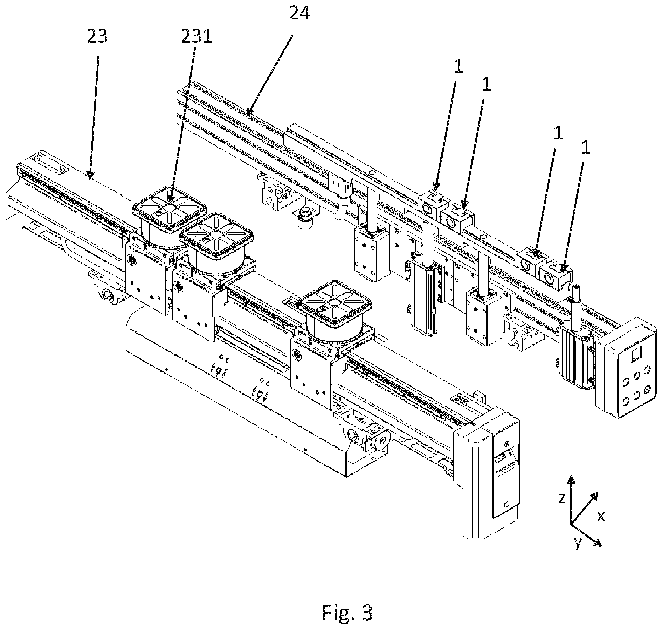

Figure 3 shows a detailed perspective view of a bar 23 of the work plane 2, which includes positioning and clamping means. In particular, in Figure 3, the clamping means include vacuum suction cups 231 for holding the piece P in position.

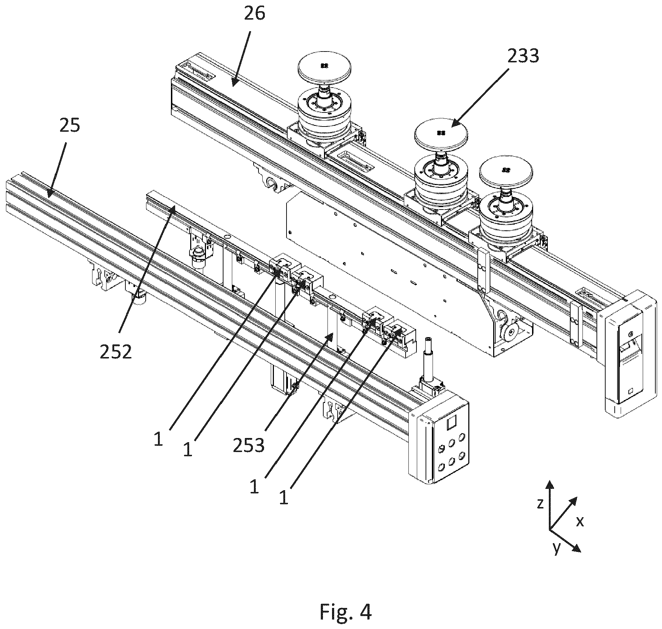

Figure 4 shows a detailed perspective view of a bar 25 of the work plane 2, which in this case includes gripping means, such as gripping devices 233 for holding the piece P in position. These gripping devices 233 can have a fixed height from the work plane 2 and can be equipped with a top plate for clamping the piece, which can be pneumatically movable with respect to the work plane. These gripping devices 233 can be of the telescopic type, each comprising a plurality of tubular elements capable of sliding within each other to position the piece P at a predetermined height with respect to the work plane 2.

Referring again to Figure 1, the work plane 2 also includes a base 21. The bridge 3 of the work centre M is movably coupled to the base 21 along a first axis X and includes one or more processing members 32 for machining the pieces P.

The movable bridge 3 provides the processing members 32 with the degrees of freedom necessary for the translation required to perform the machining of the pieces P.

These processing members 32 can also be movable relative to the movable bridge 3 and be operatively coupled to one or more guiding means of the movable bridge 3, capable of providing controlled translations or rotations along at least one direction with respect to the work plane 2 or the movable bridge 3 when actuated by respective actuators.

In particular, the processing members 32 are coupled by respective guiding means in a sliding manner along a second axis Y, orthogonal to the first axis X. These processing members 32 are also movable along a third axis Z, orthogonal to both the first X and second Y axes. Additionally, these processing members 32 can rotate around one, two, or three rotation axes.

Therefore, the movements of the movable bridge 3 and the processing members 32 themselves provide these processing members 32 with the degrees of freedom necessary for translation and/or rotation to perform machining on a desired point of the surface or portion of the piece P.

The work centre M may include a tool magazine 31 for housing processing members.

The work centre M includes at least one contact detection device 1. This contact detection device 1 can be arranged on the work plane 2 or at a predetermined distance from it, as described with reference to Figures 3 and 4. The work centre M can include a sufficient number of contact detection devices 1 to determine that the piece P is correctly arranged on the work plane.

The contact detection devices 1 can be arranged along any of the outer edges of the work plane 2 or within the work plane 2 itself, in an arbitrary configuration.

In Figures 3 and 4, the contact detection devices 1 are arranged on the respective bars 24 and 25 to interface and/or contact the piece P when it is arranged on the work plane 2 or at a predetermined height relative to it.

For instance, referring to Figure 4, the contact detection devices 1 can be secured or fixed to a movable element 252 of the bar 25. This movable element 252 can be operatively coupled to one or more guiding means of the bar 25, such as a plurality of pistons 253, capable of positioning the movable element 252 of the bar 25 at a predetermined height with respect to the work plane 2 when actuated so that the contact detection devices 1 attached to it come into contact with the piece P when it is correctly arranged on the work plane 2 or at a predetermined height relative to it.

Each of the contact detection devices 1 is configured to emit at least one signal in response to determining that at least a portion of the contact detection device 1 is in contact with a piece P. This signal can be an electrical signal, such as an analog or digital signal. However, it is clear that this description should not be considered limited to the specific type of emitted signal. For example, the signal can be a visual, tactile, or acoustic signal, and therefore not necessarily an electrical signal.

The contact detection device 1 can include a pressure switch or a contact sensor, such as a load cell or an inductive sensor.

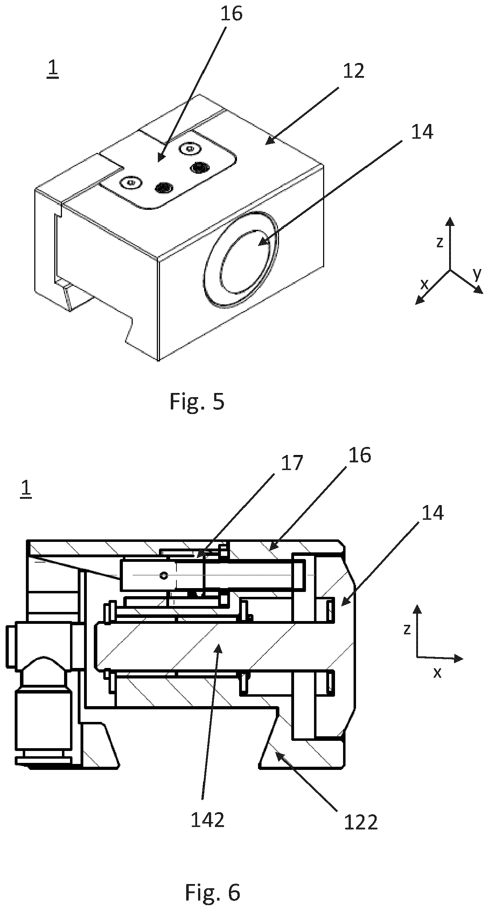

Figure 5 shows a perspective view of a contact detection device 1. Figure 6 shows a section in the XZ plane of the contact detection device shown in Figure 5.

Referring to Figures 5 and 6, the contact detection device 1 can include a housing 12 comprising at least one coupling element 122 to securely fix the contact detection device 1 to the work plane 2 and/or the movable element 252 of the work plane 2 itself.

The contact detection device 1 can also include an emitter device 17 to emit at least one electrical signal.

The contact detection device 1 can include a movable contact element 14, such as a button, comprising a rod/stem 142 extending axially within the housing 12. This movable contact element 14 can move between a rest position and an active position in which the contact element 14 activates the emitter device 17, causing the emission of the electrical signal when at least a portion of the surface of the movable contact element 14 is depressed by the piece P with which it is in contact.

The contact detection device 1 can include one or more signalling means of acoustic, visual, and/or tactile type to communicate the signal emitted by the emitter device 17. For example, in Figure 5, two visual elements are visible to emit a visual signal, such as a light signal.

As shown in Figure 6, the signalling means can include one or more LEDs capable of converting the received electrical signal into a visual signal, or a single multicolour (RGB) LED. When the signalling means are of the optical type, the contact detection device 1 can include an optical window 16 to transmit the visual signal outside the device 1 itself.

The signalling means can include a visual indicator with two or three different colours depending on the state of the contact detection device 1.

For instance, when the device 1 is in a contact detection state, these signalling means can emit a visual signal of a first colour, such as green, to confirm that the contact detection device 1 is in contact with the piece P, and emit a visual signal of a second colour, such as yellow, to indicate that the contact detection device 1 is not in contact with the piece P.

Conversely, when the device 1 is in an alert detection state, these signalling means can emit a visual signal of a third colour, such as red, to indicate that the contact detection device 1 is in contact with the piece P.

Alternatively, or in addition, the means can include an acoustic indicator to communicate the contact with the piece P.

The contact detection device 1 can be configured to switch from a contact detection state to an alert detection state in response to a control signal, such as a control signal received from a control logic unit.

When the contact detection device 1 is in a contact detection state, the device 1 is configured to emit a confirmation signal in response to determining that at least a portion of the contact detection device 1 is in contact with the piece P, such as a green visual signal or any other signal indicating that the piece P is in contact with the device 1.

The contact detection device 1 can also be configured to emit, when in a contact detection state, a guide signal in response to determining that at least a portion of it is not in contact with the piece P. This guide signal allows the operator to determine that the piece P must be arranged in contact with the contact detection device 1 for the correct execution of the machining program. For example, the guide signal can be an intermittent signal.

Conversely, if the contact detection device 1 is in an alert detection state, the device 1 is configured to emit an alert signal in response to determining that at least a portion of it is in contact with the piece P. In this case, the alert signal can include an orange light or any other signal indicating an incorrect placement of the piece P on the work plane 2, as this piece P should not be in contact with the device 1.

As previously described, the signal generated by the device 1 can be an electrical signal to allow its easy transmission to a display device 4, equipped, for example, with a graphical interface. This device can include any mobile or fixed terminal equipped with a display. For example, the display device 4 can include a mobile device, such as a smartphone, tablet, or smartwatch, communicatively coupleable to the contact detection device 1 directly or indirectly via a cloud server and the internet.

As shown in Figure 1, the display device can be a fixed terminal communicatively coupled to the work centre M.

Through the graphical interface, it is possible to check for any discrepancies between the signal displayed by the visualization means of the contact detection device 1 and the values shown on the graphical interface itself, to detect any malfunctions of the contact detection device 1.

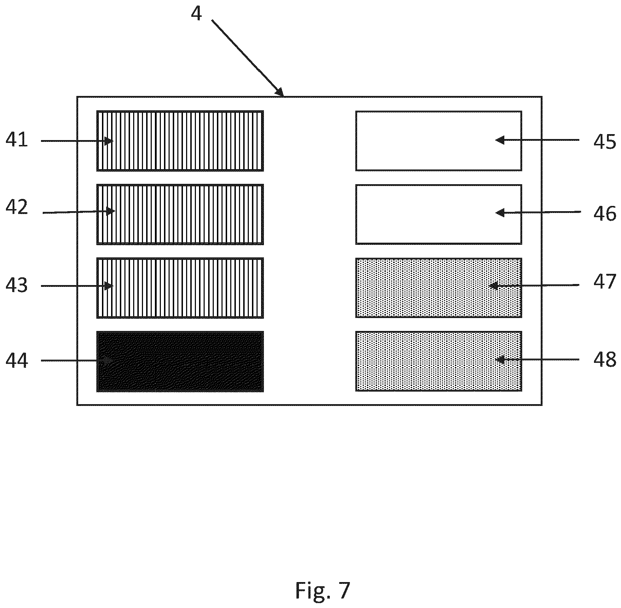

Referring to Figure 7, a graphical interface is schematically shown.

This graphical interface can include a plurality of status indicators 41-48, each indicating the status of a corresponding contact detection device 1. Therefore, the graphical interface can display at least one signal emitted by said at least one contact detection device 1.

In the example in Figure 7, the status indicators 41-44, on the left in the figure, indicate the status of the contact detection devices 1 that are in a contact detection state. The indicator 44, represented here with a solid fill, indicates that the contact detection device 1 is in contact with the piece P. Conversely, the indicators 41-43, represented here with a striped fill, are not in contact with the device and display a guide signal to indicate to the operator to place a piece P in contact with the corresponding contact detection devices 1.

Additionally, Figure 7 shows a plurality of status indicators 45-48, arranged on the right in the figure, indicating the status of the contact detection devices 1 that are in an alert detection state. In particular, the indicators 47 and 48, represented here with a dotted fill, indicate that the respective contact detection devices 1 are in contact with the piece P and therefore display an alert signal. Conversely, the indicators 45 and 46, represented here without fill, indicate that the piece P is not in contact with the respective devices and therefore do not display an alert signal.

However, it is clear that this description should not be considered limited to the specific example of the indicators shown in Figure 7.

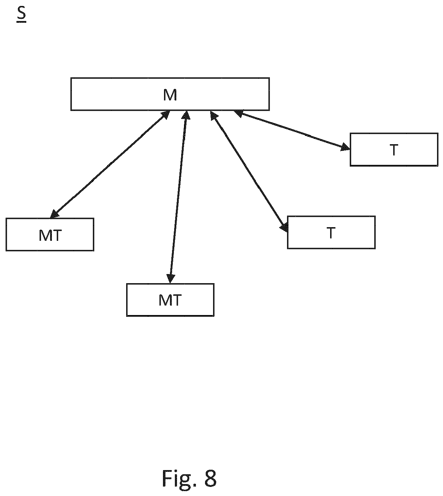

Referring to Figure 8, a system S is schematically shown comprising a work centre M shown in Figure 1 and a plurality of mobile terminals MT and fixed terminals T communicatively associated with the previously described work centre M. These devices can be arranged arbitrarily with respect to the work centre M, allowing the operator to remotely check/manage the status and/or respective signals emitted by the contact detection devices 1.

These one or more mobile terminals MT and/or fixed terminals T are suitable for receiving and displaying said one or more signals emitted by said at least one contact detection device 1, using, for example, visualization means such as a viewer/display.

The work centre M can include a numerically controlled machine, such as a machine equipped with a control logic unit (not shown in the figures) and configured to coordinate the actions necessary for executing one or more machine instructions to perform the methods 100 and/or 200 described below.

This control logic unit can be configured to emit a control signal to control one or more contact detection devices 1. Additionally, the control logic unit can be operatively connected to visualization means 4 to present information related to the operation of the work centre M itself, and/or transmission means to transmit these signals to said one or more mobile terminals MT and/or fixed terminals T.

This control logic unit can be an external control unit to the work centre M, for instance, arranged on a respective terminal MT, T.

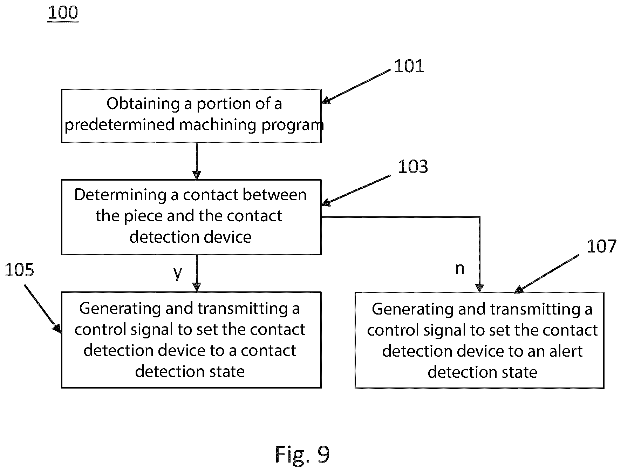

Referring to Figure 9, a block diagram of a method 100 to operate at least one contact detection device 1 is shown, according to one embodiment of the present invention.

The method 100 can be implemented by a control logic unit, comprising, for example, one or more processors or computers, to operate at least one contact detection device 1 as described with reference to Figures 1-7. The method 100 can be implemented by one or more machine instructions that result, when executed by a control logic unit, in the execution of the method 100. These instructions can be stored on a software product or dedicated storage medium.

The method comprises step 101 in which at least a portion of a predetermined machining program is obtained, including at least one position of said piece P to be machined on said work plane 2.

The predetermined machining program may include a sequence of positions of the pieces P to be machined relative to the work plane 2. The machining program can be stored in a memory or storage unit of the work centre M or externally stored to the work centre M itself, for example, in a server or terminal MT, T coupled to the control logic unit.

The method comprises step 103 in which it is determined whether said position includes contact between said piece P and said at least one contact detection device 1.

The method comprises step 105 in which it generates and transmits, for example, via a transmitter of the control logic unit or coupled to it, a control signal to switch said at least one contact detection device 1 to a contact detection state in response to a determination 103 that said position includes contact between said piece P and a respective contact detection device 1. In this way, the method allows the contact detection device 1 to emit a confirmation signal in response to determining that at least a portion of the contact detection device 1 is in contact with the piece P, as indicated by the predetermined machining program.

The method also comprises step 107 in which it generates and transmits, for example, via a transmitter of the control logic unit or coupled to it, a control signal to switch said contact detection device 1 to an alert state in response to determining that said position does not include contact between said piece P and the respective contact detection device 1. In this way, the method allows the contact detection device 1 to emit an alert signal in response to determining that at least a portion of the contact detection device 1 is in contact with the piece P.

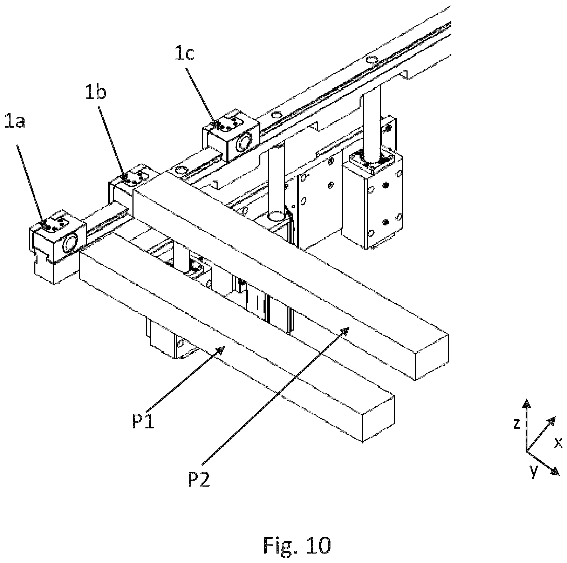

For example, referring to Figure 10, the control logic unit determines during step 103 that the portion of a predetermined machining program indicates that piece P1 and piece P2 must be positioned in contact with their respective contact detection devices 1a and 1b, while the contact detection device 1c should not be in contact with a piece P to be machined.

In step 107, the control logic unit generates and transmits a control signal to switch contact detection devices 1a and 1b to a contact detection state while contact detection device 1c is in an alert state.

The operator then places the pieces P1 and P2, such as wooden bars or blocks, to be machined on the work plane, keeping piece P2 correctly in contact with contact detection device 1b but inadvertently placing piece P1 not in contact with contact detection device 1a.

In this case, the contact detection device 1b will emit a confirmation signal of contact with the respective piece P2, while device 1a will continue to emit a guide signal to indicate to the operator that the contact has not yet occurred or has not occurred correctly.

In another application example, an additional piece (not shown in Figure 10) placed in contact with contact detection device 1c will cause the emission of an alert signal, such as a yellow or orange light signal, indicating that this piece has been incorrectly referenced in contact with contact detection device 1c.

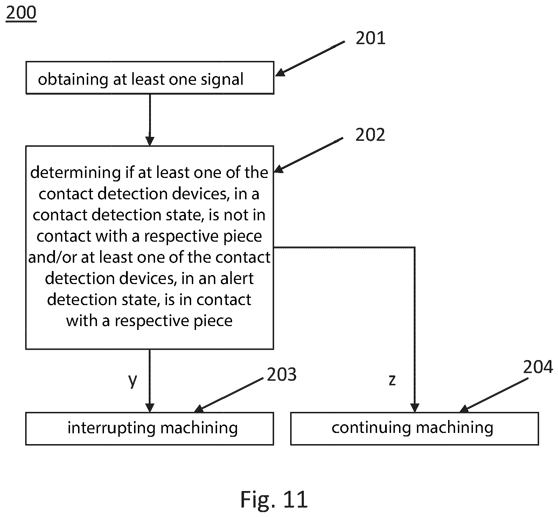

Referring now to Figure 11, a block diagram of a method 200 to control the operation of the work centre M is shown, according to one embodiment of the present invention. The method 200 can be implemented by one or more machine instructions that result, when executed by a control logic unit, in the execution of the method 200. These instructions can be stored on a software product or dedicated storage medium.

The method may include a preliminary step in which the operator references the piece on the work plane or activates one or more movable elements 252, or stops, of the bar 25, which rise pneumatically to the piece positioning position to allow the operator to reference the piece against the stops and in contact with one or more contact detection devices 1.

The method comprises step 201 in which one or more signals emitted by the contact detection devices 1 are obtained. This step may also include determining the respective state of each device 1, using, for example, the signal emitted by the corresponding device 1, or the respective state may already be known to the control logic unit. Therefore, if the piece is correctly referenced in contact, the contact detection device 1 emits a signal indicating it is in contact with the piece, allowing both the stops to lower and the machining cycle to start.

Conversely, if the piece is not correctly referenced in contact with the contact detection device 1, the control logic unit can transmit a control signal to prevent the start of the machining cycle, thereby preventing the automatic lowering of the stops.

The method comprises step 202 in which it is determined whether at least one of the contact detection devices 1, in a contact detection state, is not in contact with a respective piece P and/or if at least one of the contact detection devices 1, in an alert state, is in contact with a respective piece P.

The method comprises step 203, in which the control logic unit transmits a control signal to interrupt the machining process of the work centre M, preventing the execution of the subsequent machining step or the start of the machining cycle if it is determined that at least one of the contact detection devices 1, in a contact detection state, is not in contact with a respective piece P and/or at least one of the contact detection devices 1, in an alert state, is in contact with a respective piece P.

Conversely, if the control logic unit detects that all the contact detection devices 1, in a contact detection state, are in contact with a respective piece P and that all the remaining contact detection devices 1, in an alert state, are not in contact with a respective piece P, the method proceeds with step 204, in which the control logic unit transmits a control signal to continue the machining process of the work centre M, allowing the execution of the subsequent machining step.

Advantageously, by means of the work centre and the associated method, object of the invention, it is possible to proactively and intelligently guide the operator during the loading of the pieces to be machined, reducing discrepancies between the machining program and the actual machining that will be performed, thus obtaining more precise machining on the piece.

A second advantage is that, by means of the work centre and the associated method, it is possible to ensure the correct placement of the pieces to be machined on the work plane, thus avoiding collisions of the work centre's processing members during the machining process.

A third advantage is that, by means of the work centre and the associated method, it is possible to promptly interrupt the execution of the next machining step or prevent the start of the machining cycle, thus avoiding undesired machining or collisions.

An additional advantage is that, by means of the work centre and the associated method, it is possible to communicate the actual status of the work centre and the pieces placed on the work plane, thereby improving human-machine interaction.

The present invention has been described by way of illustration, but not limitation, according to its preferred embodiments. It is understood that variations and/or modifications may be made by those skilled in the art without departing from the relative scope of protection, as defined by the appended claims.

## Claims

1. Work centre (M) comprising
a work plane (2) on which the pieces (P) to be machined can be arranged and fixed, comprising a base (21);
a bridge (3) movably coupled to said base (21), and comprising one or more processing members (32) for machining said pieces (P); and
at least one contact detection device (1), said at least one contact detection device (1) being arranged on said work plane (2) and configured to emit at least one signal in response to a determination that at least a portion of said contact detection device (1) is in contact with a piece (P) or is not in contact with said piece (P).

2. The work centre (M) according to claim 1, wherein said at least one contact detection device (1), when in a contact detection state, is configured to emit a confirmation signal in response to a determination that at least one portion of said contact detection device (1) is in contact with said piece (P), wherein said confirmation signal is indicative that said piece (P) is positioned correctly in contact with said contact detection device (1).

3. The work centre (M) according to claim 2, wherein said contact detection device (1), when in said contact detection state, is configured to emit a guide signal in response to a determination that at least a portion of said contact detection device (1) is not in contact with said piece (P).

4. The work centre (M) according to claim 2, wherein said guide signal is an intermittent signal, or a variable intensity signal.

5. The work centre (M) according to any one of the preceding claims, wherein said at least one contact detection device (1), when in an alert detection state, is configured to emit an alert signal in response to a determination that at least a portion of said contact detection device (1) is in contact with said piece (P), wherein said alert signal indicates that said piece (P) is not positioned correctly on said work plane (2).

6. The work centre (M) according to claim 5 and any one of claims 2-4, wherein said at least one contact detection device (1) is configured to pass between said contact detection state and said alert detection state in response to a control signal.

7. The work centre (M) according to any one of the preceding claims, wherein said at least one contact detection device (1) comprises signalling means of the acoustic type, and/or visual type, and/or tactile type for communicating to an operator said signal emitted by said contact detection device (1).

8. Work centre (M) according to any one of the preceding claims, wherein said contact detection device (1) comprises a pressure switch, or a contact sensor, or an inductive sensor.

9. Work centre (M) according to any one of the preceding claims, wherein said contact detection device (1) comprises:
a housing (12) comprising at least one coupling element (122) for fixedly attaching said contact detection device (1) to said work plane (2);
an emitter device (17) for emitting said at least one signal;
a movable contact element (14), said movable contact element (14) being movable between a rest position and an active position in which said contact element activates said emitter device (17).

10. Work centre (M) according to any one of the preceding claims, comprising a display device (4) adapted to display said at least one signal emitted by said at least one contact detection device (1).

11. Work centre (M) according to any one of the preceding claims, wherein said display device (4) comprises a mobile device communicatively coupled to said contact detection device 1.

12. Work centre (M) according to any one of the preceding claims, comprising at least one bar (25), which comprises at least one movable element (252) on which said at least one contact detection device (1) is fixed in a fixed manner, said at least one movable element (252) being operatively coupled to one or more guide means of said bar (25) to place said movable element (252), and thus said at least one contact detection device (1), at a predetermined height with respect to said work plane (2).

13. Method (100) implemented by a control logic unit for operating at least one contact detection device (1) arranged on a work plane (2) of a work centre (M) of the type comprising a base (21) of said work plane (2); a bridge (3), coupled in a movable manner to said base (21), and comprising one or more machining elements (32) for machining pieces (P); and wherein said method comprises:
obtaining (101) at least one portion of a predetermined machining program comprising at least one position of said piece (P) to be machined on said work plane (2);
determining (103) that said position comprises a contact between said piece (P) and said at least one contact detection device (1); and
in response to said determination, generating and transmitting (105) a control signal to switch said at least one contact detection device (1) to a contact detection state, wherein said contact detection device (1) emits a confirmation signal in response to a determination that at least a portion of said contact detection device (1) is in contact with said piece (P).

14. Method (100) according to claim 13 wherein in response to a determination that said position does not comprise a contact between said piece (P) and said at least one contact detection device (1), generating and transmitting (107) a control signal to switch said contact detection device (1) to an alert detection state, wherein said contact detection device (1) emits an alert signal in response to a determination that at least a portion of said contact detection device (1) is in contact with said piece (P).

15. System (S) comprising a work centre (M) as claimed in any of claims 1 -12, comprising a communication module for transmitting one or more signals emitted by said at least one contact detection device (1); and
one or more mobile terminals (MT) and/or fixed (T) adapted to receive and display said one or more signals emitted by said at least one contact detection device (1).

16. A method (200) implemented by a logic control unit for controlling the machining of the work centre (M) as claimed in any one of claims 1 -12, and wherein said method comprises:
obtaining (201) one or more signals emitted by said at least one contact detection device (1); and
transmitting (203) a control signal to prevent execution of a next machining step of a predefined machining program, in response to a determination that said at least one of the contact detection devices (1), in a contact detection state, is not in contact with a respective piece (P) and/or in response to a determination that said at least one of said contact detection devices (1), in an alert detection state, is in contact with a respective piece (P).
